# FASCICULE DE BREVET EUROPEEN

(11) **EP 2 160 525 B1**
(45) Date de publication et mention de la délivrance du brevet: **11.11.2015**
(21) Numéro de dépôt: 08806013.2
(22) Date de dépôt: 17.06.2008
(51) Int. Cl.: F16F 15/121

(54) **DISPOSITIF D'AMORTISSEMENT D'OSCILLATION DE TORSION NOTAMMENT POUR EMBRAYAGE A FRICTION, PAR EXEMPLE POUR VEHICULE AUTOMOBILE**
VORRICHTUNG ZUR TORSIONSSCHWINGUNGSDÄMPFUNG, INSBESONDERE FÜR EINE REIBUNGSKUPPLUNG, Z. B. FÜR EIN AUTOMOBIL
DEVICE FOR DAMPENING TORSION OSCILLATION PARTICULARLY FOR A FRICTION CLUTCH, FOR EXAMPLE FOR AN AUTOMOBILE

(30) Priorité: 26.06.2007 FR 0756042
(43) Date de publication de la demande: 10.03.2010
(73) Titulaire: Valeo Embrayages, 80009 Amiens (FR)
(72) Inventeur: DAST, Pascal, F-80750 Fienvillers (FR)
(74) Mandataire: Tran, Chi-Hai
(86) Numéro de dépôt international: PCT/FR2008/051078
(87) Numéro de publication internationale: WO 2009/007561

(56) Documents cités:
- EP-A- 0 200 634
- DE-A1- 4 040 606
- GB-A- 2 413 615
- US-A1- 2003 217 616
- US-B1- 6 168 526

## Description

La présente invention concerne un dispositif d'amortissement d'oscillation de torsion, notamment destiné à un embrayage, en particulier pour véhicule automobile.

Dans un véhicule automobile, un embrayage à friction a pour fonction de transmettre un couple entre un élément rotatif d'entrée et un élément rotatif de sortie, par pincement de la friction entre des plateaux de pression et de réaction liés en rotation avec un moteur.

En général, l'élément d'entrée est formé par un disque de friction. L'élément de sortie est lié en rotation, avec ou sans jeu angulaire, à un moyeu lié en rotation avec un arbre d'entrée de boîte de vitesses.

L'embrayage à friction a aussi pour fonction d'assurer la continuité du couple transmis et de filtrer les vibrations en provenance du moteur, notamment grâce à des moyens d'amortissement comportant des organes élastiques et des moyens de frottement.

On connaît déjà, dans l'état de la technique, par exemple dans le document US-A-2003/217616, un dispositif d'amortisseur d'oscillation de torsion du type comportant un amortisseur comprenant:
- des éléments rotatifs d'entrée et de sortie sensiblement coaxiaux,
- un premier élément de couplage, de forme générale de révolution, solidaire en rotation de l'élément rotatif d'entrée,
- un deuxième élément de couplage, de forme générale de révolution, solidaire en rotation de l'élément rotatif de sortie,
- des moyens d'amortissement comprenant des organes élastiques à effet circonférentiel portés par les premier et deuxième éléments de couplage, et
- des moyens de limitation de débattement angulaire entre les éléments rotatifs d'entrée et de sortie.

Un amortisseur comporte généralement un flasque communément appelé un voile intercalé entre deux pièces dites rondelles de guidage. Ces deux rondelles de guidage sont habituellement liées entre elles en rotation.

On notera que l'amortisseur est dit « symétrique » lorsque le disque de friction est solidaire du voile. Dans ce cas, le premier élément de couplage est formé par le voile et le deuxième élément de couplage est formé par les rondelles de guidage de l'amortisseur.

Par ailleurs, l'amortisseur est dit « asymétrique » lorsque le disque de friction est solidaire de l'une des rondelles de guidage. Dans ce cas, le premier élément de couplage est formé par les rondelles de guidage et le deuxième élément de couplage est formé par le voile de l'amortisseur.

Habituellement, les organes élastiques sont logés dans des fenêtres ménagées dans les premier et deuxième éléments de couplage.

Dans de nombreux cas, le débattement angulaire entre les éléments rotatifs d'entrée et de sortie est limité par les organes élastiques. En effet, lorsque le couple est transmis entre les premier et deuxième éléments de couplage, les organes élastiques sont susceptibles d'être comprimés jusqu'à une limite de compression définissant un angle maximal de débattement angulaire.

Or, l'utilisation des organes élastiques jusqu'à leur limite de compression réduit leur durée de vie.

De manière à augmenter la durée de vie des organes élastiques, le document FR 2 879 999 décrit un embrayage du type précité comprenant un amortisseur, dont les moyens de limitation comprennent des butées de limitation angulaire complémentaires ménagées, d'une part, sur un contour radialement interne du premier élément de couplage et, d'autre part, sur un organe de limitation solidaire en rotation du deuxième élément de couplage.

Lorsque l'angle de débattement atteint l'angle de limitation, le couple est alors transmis du premier élément de couplage à l'organe de limitation, solidaire en rotation du deuxième élément de couplage, par l'intermédiaire des butées de limitation. Le couple en excès, appelé « surcouple », ne passe alors plus par les organes élastiques mais entre le premier élément de couplage et l'élément rotatif de sortie.

La tendance actuelle consiste à augmenter les couples moteurs, ce qui peut conduire à des contraintes appliquées plus importantes sur le premier élément de couplage. Or, dans les solutions de l'état de la technique, le « surcouple » passe par le premier élément de couplage. Le premier élément de couplage doit donc être conformé pour permettre le passage d'un « surcouple » de plus en plus important.

Une solution consiste à augmenter l'épaisseur du premier élément de couplage. Cependant, l'épaisseur du premier élément de couplage dans un embrayage de l'état de la technique est limitée par les dimensions internes de l'amortisseur.

L'invention a notamment pour but de remédier à ce problème.

A cet effet, l'invention a pour objet un dispositif d'amortissement d'oscillation de torsion notamment pour embrayage à friction, par exemple pour véhicule automobile, du type comportant au moins un amortisseur comprenant:
- des éléments rotatifs d'entrée et de sortie sensiblement coaxiaux,
- un premier élément de couplage, de forme générale de révolution, solidaire en rotation de l'élément rotatif d'entrée,
- un deuxième élément de couplage, de forme générale de révolution, solidaire en rotation de l'élément rotatif de sortie,
- des moyens d'amortissement comprenant des organes élastiques, notamment à effet circonférentiel, portés par les premier et deuxième éléments de couplage, et
- des moyens de limitation de débattement angulaire entre les premier et deuxième éléments de couplage,
où les moyens de limitation comprennent des moyens de limitation angulaire complémentaires ménagés, d'une part, sur l'élément rotatif de sortie et, d'autre part, sur un organe de limitation solidaire en rotation de l'élément rotatif d'entrée,
l'organe de limitation étant de forme générale de révolution et l'organe de limitation transmetant le couple de l'élément rotatif d'entrée à l'élément rotatif de sortie par l'intermédiaire de l'organe de limitation lorsque l'angle de débattement atteint l'angle de limitation.

Les moyens de limitation angulaire complémentaires sont conformés de manière à définir un angle de limitation de débattement entre les éléments rotatifs d'entrée et de sortie évitant ainsi que les organes élastiques atteignent leur limite de compression.

Lorsque l'angle de débattement atteint l'angle de limitation, le couple est alors transmis de l'élément rotatif d'entrée à l'élément rotatif de sortie, par l'intermédiaire de l'organe de limitation. Le « surcouple » ne passe alors plus ni par les organes élastiques ni par l'un des éléments de couplage.

Avantageusement, cela permet de transmettre des « sourcouples » importants indépendamment des dimensions des éléments de couplage. On peut ainsi dimensionner avantageusement les éléments de couplage et l'amortisseur.

Un dispositif d'amortissement selon l'invention peut en outre comporter l'une ou plusieurs des caractéristiques optionnelles ci-dessous, considérées individuellement ou selon toutes les combinaisons possibles:
- les moyens de limitation sont délimités, d'une part, par des saillies radiales ménagées sur le contour interne de l'organe de limitation et, d'autre part, par des saillies radiales ménagées sur un contour radialement externe de l'élément rotatif de sortie, lesdites saillies étant conformés de manière à pouvoir coopérer entre elles ;
- l'organe de limitation est solidaire en rotation du premier élément de couplage ;
- l'élément rotatif de sortie et le deuxième élément de couplage sont conformés en une seule pièce ;
- le premier élément de couplage est une rondelle de guidage et le deuxième élément de couplage est un voile ;
- le premier élément de couplage est un voile et le deuxième élément de couplage est une rondelle de guidage ;
- l'amortisseur comprend en outre :
   - un deuxième élément rotatif de sortie,
   - un troisième élément de couplage, de forme générale de révolution, solidaire en rotation de l'élément rotatif d'entrée (12),
   - un quatrième élément de couplage, de forme générale de révolution, solidaire en rotation du deuxième élément rotatif de sortie,
   - des moyens d'amortissement comprenant des organes élastiques, notamment à effet circonférentiel, portés par les troisième et quatrième éléments de couplage ;
- l'élément rotatif d'entrée est un disque de friction de l'embrayage ;
- l'élément rotation de sortie est lié en rotation, avec ou sans jeu angulaire, à un moyeu lié en rotation avec un arbre d'entrée d'une boîte de vitesses du véhicule automobile ;
- le deuxième élément rotation de sortie est lié en rotation, avec ou sans jeu angulaire, à un moyeu lié en rotation avec un arbre d'entrée d'une boîte de vitesses du véhicule automobile ;
- l'amortisseur comprend de plus :
   - un troisième élément rotatif de sortie, comprenant un troisième ensemble de cannelures ménagées sur le contour radialement interne dudit troisième élément rotatif de sortie, les cannelures dudit troisième ensemble de cannelures étant aptes à s'engrener sans jeu circonférentiel avec une denture correspondante sur la périphérie d'un moyeu,
   - un cinquième élément de couplage, de forme générale de révolution, solidaire en rotation d'un des deuxième ou quatrième élément de couplage,
   - un sixième élément de couplage, de forme générale de révolution, solidaire en rotation du troisième élément rotatif de sortie,
   - des moyens d'amortissement comprenant des organes élastiques, notamment à effet circonférentiel, portés par les cinquième et sixième éléments de couplage ;
- les organes élastiques sont des ressorts hélicoïdaux.

L'invention à également pour objet une chaine cinématique comprenant :
- un plateau et un volant moteur, entraîné en rotation par un moteur,
- un disque d'embrayage entrainé en rotation par frottement entre le plateau et le contre plateau,
- le moyeu du disque d'embrayage transmettant le mouvement de rotation du disque d'embrayage après amortissement à un arbre de boîte de vitesses,
où le disque d'embrayage est conforme aux différents modes de réalisation possible de l'invention.

L'invention sera mieux comprise à la lecture de la description qui va suivre, donnée uniquement à titre d'exemple et faite en se référant aux dessins annexés dans lesquels:
- la figure 1 est une vue en perspective éclatée d'un dispositif selon un premier mode de réalisation de l'invention;
- la figure 2 est une coupe axiale d'un dispositif selon le premier mode de réalisation ;
- la figure 3 est une vue de face de l'organe de limitation d'un dispositif selon le premier mode de réalisation ;
- la figure 4 est une vue de face d'un voile de l'embrayage de la figure 1, de l'organe de limitation et des moyens d'amortissement associés;
- la figure 5 est une coupe axiale d'un dispositif selon un deuxième mode de réalisation.

Pour des raisons de clarté, les différentes pièces représentées sur les figures ne sont pas nécessairement à l'échelle. On entend dans la suite de la description par direction axiale la direction sensiblement suivant l'axe de rotation du dispositif d'amortissement et par direction radiale la direction sensiblement perpendiculaire à ladite direction axiale.

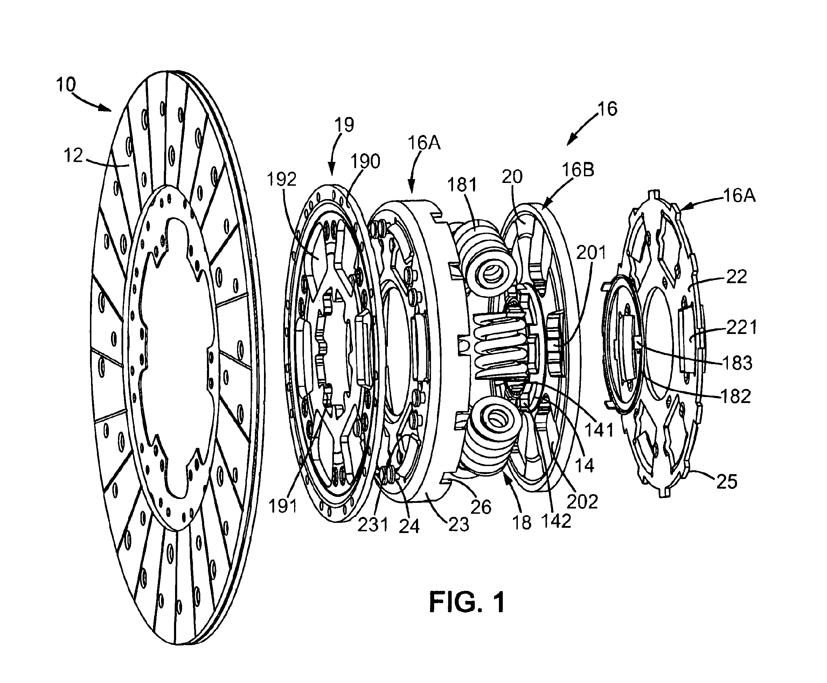

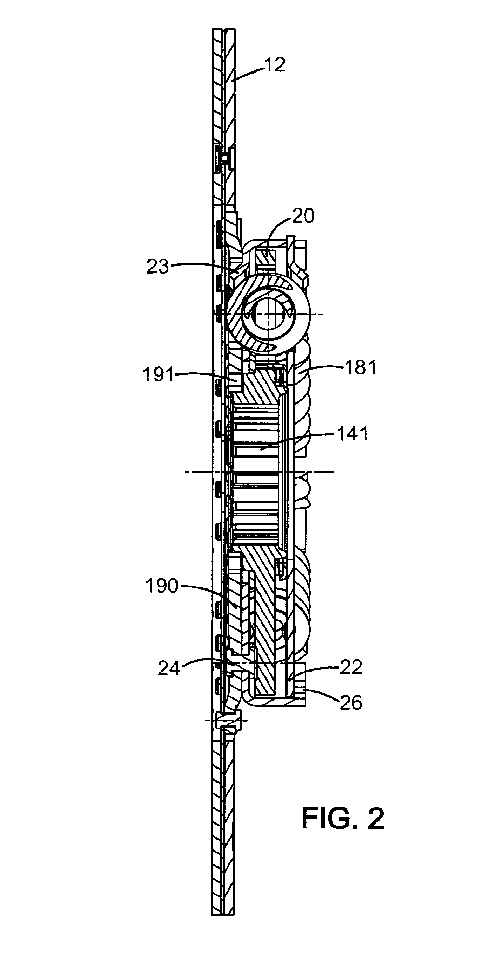

On a représenté sur les figures 1 et 2 un dispositif d'amortissement d'oscillation de torsion notamment pour embrayage à friction, par exemple pour véhicule automobile, selon un premier mode de réalisation de l'invention.

Dans ce premier mode de réalisation, le dispositif d'amortissement 10 comprend un élément rotatif d'entrée 12, un élément rotatif de sortie 14 sensiblement coaxiaux, un premier élément de couplage 16A, de forme générale de révolution, solidaire en rotation de l'élément rotatif d'entrée 12, un deuxième élément de couplage 16B, de forme générale de révolution, solidaire en rotation de l'élément rotatif de sortie 14, des moyens d'amortissement 18 portés par les premier et deuxième éléments de couplage, un flasque 190 de forme générale de révolution constituant les moyens de limitation de débattement angulaire 19 entre les premier 16A et deuxième 16B éléments de couplage.

Le dispositif 10 selon l'invention dispose d'un élément rotatif de sortie sous la forme d'un moyeu (non représenté), de forme générale annulaire, lié en rotation avec l'arbre d'entrée de la boîte de vitesses du véhicule automobile. A cet effet, le moyeu est généralement muni de cannelures longitudinales internes permettant de le solidariser en rotation avec une extrémité de l'arbre d'entrée de la boîte de vitesses.

L'élément rotatif d'entrée 12 est un disque de friction susceptible d'être lié en rotation avec un volant moteur par pincement entre des plateaux de pression et de réaction liés en rotation avec le volant moteur et actionnés par des moyens embrayeurs (non représentés).

L'élément rotatif de sortie 14 se compose d'une pièce de forme générale annulaire, comprenant en périphérie interne, une denture interne 141 qui engrène, avec un jeu circonférentiel prédéterminé, avec une denture correspondante de la périphérie externe d'un moyeu. La denture interne 141 forme des saillies sensiblement radiales destinées à coopérer avec des évidements complémentaires de la denture de la périphérie externe du moyeu.

L'élément rotatif de sortie 14, comprend également sur une partie de sa périphérie externe, une denture externe 142 s'étendant axialement qui engrène, avec un jeu circonférentiel prédéterminé, avec une denture correspondante sur les moyens de limitation de débattement angulaire 19.

De manière classique, l'élément rotatif de sortie 14 est solidarisé à la périphérie interne du deuxième élément de couplage 16B.

Dans ce premier mode de réalisation, l'amortisseur 16 du dispositif selon l'invention est asymétrique. On entend par amortisseur 16 le dispositif comprenant les premier 16A et deuxième 16B élément de couplage, l'élément rotatif de sortie 14 ainsi que les moyens d'amortissement 18.

Le premier élément de couplage 16A est formé par des première 22 et deuxième 23 rondelles de guidage, la deuxième rondelle de guidage 23 est fixée au flasque 190, par exemple au moyen de rivets 24. Le deuxième élément de couplage 16B est un voile 20.

Les première 22 et deuxième 23 rondelles de guidage sont solidarisées à l'aide de pattes axiales 25 ménagées à la périphérie de la première rondelle de guidage 22.

En effet, les pattes axiales 25 sont emboîtées dans des encoches complémentaires 26 de solidarisation en rotation ménagées sur le contour de la deuxième rondelle de guidage 23.

Le voile 20 est intercalé axialement entre les deux rondelles de guidage 22, 23, co-axialement à celles-ci.

Le dispositif d'amortissement 10 comporte également des moyens d'amortissement 18 destinés à amortir des vibrations en provenance du moteur. Ces moyens d'amortissement 18 sont activés lors d'un débattement angulaire entre les rondelles de guidage 22, 23 et le voile 20.

Les moyens d'amortissement 18 comportent des organes élastiques à action circonférentielle, tels que des ressorts hélicoïdaux de forte raideur 181, logés dans des fenêtres 221,231 des rondelles de guidage 22, 23 et dans des fenêtres 202 du voile 20.

Les moyens d'amortissement 18 comportent en outre une rondelle de frottement 182, agencée entre le voile 20 et la première rondelle de guidage 22. La rondelle de frottement 182 est liée en rotation avec le voile 20 à l'aide de pattes pliées 183 coopérant avec des encoches 201 ménagées dans des contours des fenêtres 202 du voile 20. La rondelle de frottement 182 comporte en outre une face de frottement coopérant avec la première rondelle de guidage 22. Ainsi, lorsque le voile 20 et les rondelles de guidage 22, 23 se déplacent angulairement l'un par rapport à l'autre, un frottement est généré entre la rondelle de frottement 182 et la première rondelle de guidage 22.

Afin d'augmenter la durée de vie des ressorts hélicoïdaux 181, le dispositif d'amortissement 10 comporte des moyens de limitation de débattement angulaire 19 entre le disque de friction 12 et la deuxième rondelle de guidage 23 indépendants des ressorts hélicoïdaux 181.

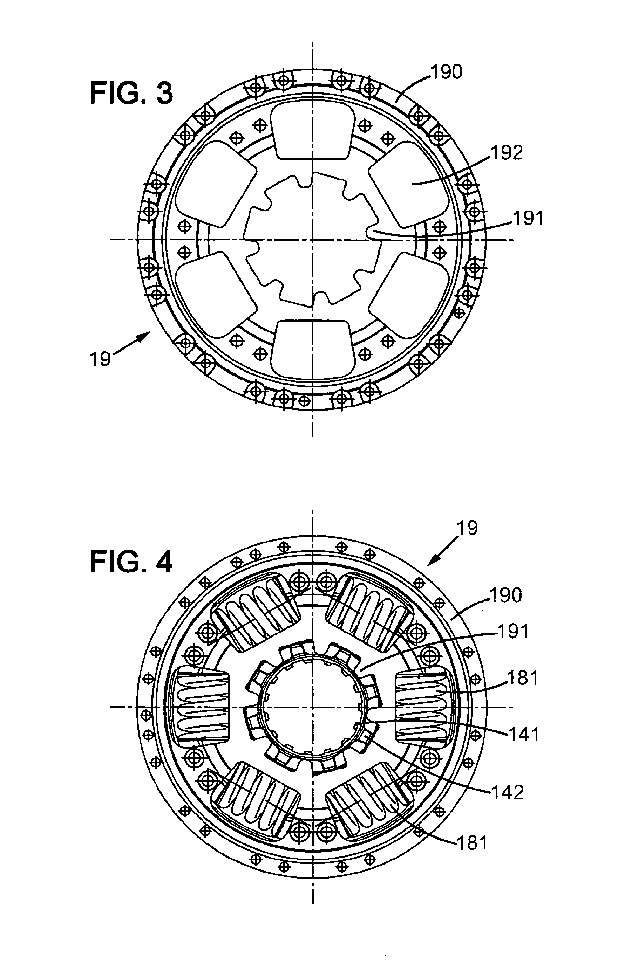

Les moyens de limitation 19 comporte un flasque 190 de forme générale annulaire, représenté sur les figures 3 et 4, fixé d'une part au disque de friction 12 et d'autre part à la deuxième rondelle de guidage 23, par exemple au moyen de rivet 24 ou de soudage.

Le flasque 190 comprend, des fenêtres 192 de plus grande dimension que les fenêtres 221, 231 des rondelles de guidage 22, 23 et que les fenêtres 202 du voile 20. Les fenêtres 192 sont dimensionnées de manière à ne pas être en contact avec les ressorts hélicoïdaux 18, comme représenté sur la figure 4.

Le flasque 190 comprend, en périphérie interne, une denture 191 qui engrène, avec un jeu circonférentiel prédéterminé, la denture externe 142 s'étendant axialement ménagé sur le contour radialement externe de l'élément rotatif de sortie 14.

Ainsi, en cours de fonctionnement du dispositif d'amortissement selon le premier mode de réalisation, lorsqu'un couple est transmis du disque de friction 12 au moyeu, il passe tout d'abord des rondelles de guidage 22,23 au voile 20 par l'intermédiaire des ressorts 181. Lorsque les ressorts hélicoïdaux 181 atteignent la limite de compression souhaitée la denture externe 142 de l'élément rotatif de sortie 14 vient en butée contre la denture 191 du flasque 190. Le surcouple moteur est alors transmis directement du disque de friction 12 au moyeu en passant par le flasque 190 et l'élément rotatif de sortie 14. Le voile 20 subit toujours le couple transmis par les ressorts hélicoïdaux. La valeur de ce couple est définie par la géométrie de l'amortisseur.

Avantageusement, cela permet de dimensionner le voile 20 de manière à réduire l'encombrement. De plus, les matériaux qui constituent le voile 20 peuvent être choisis de manière à réduire les coûts. En effet, le voile 20 subissant des contraintes moins fortes que dans les dispositifs de l'état de la technique la résistance aux contraintes des matériaux choisis ne doit plus forcement être aussi importante.

Selon une variante non représentée, l'amortisseur du dispositif d'amortissement 10 selon l'invention peut être symétrique. Le premier élément de couplage est alors un voile et le deuxième élément de couplage est une rondelle de guidage, de préférence un ensemble de deux rondelles de guidage. L'homme du métier sera adapté la disposition des éléments du dispositif selon le premier mode de réalisation pour obtenir un dispositif avec amortisseur symétrique.

Les moyens de limitation comporte un flasque de forme générale annulaire, tel que représenté sur la figure 3, fixé d'une part au disque de friction et d'autre part au voile, par exemple au moyen de rivet ou de soudage.

Ainsi, en cours de fonctionnement du dispositif d'amortissement 10 selon cette variante de l'invention, lorsqu'un couple est transmis du disque de friction au moyeu, il passe tout d'abord du voile aux rondelles par l'intermédiaire de ressorts hélicoïdaux. Lorsque les ressorts hélicoïdaux atteignent la limite de compression souhaitée la denture externe de l'élément rotatif de sortie vient en butée contre la denture du flasque. Le surcouple moteur est alors transmis directement du disque de friction au moyeu en passant par le flasque et l'élément rotatif de sortie. Les rondelles de guidage subissent toujours le couple transmis par les ressorts hélicoïdaux. La valeur de ce couple est définie par la géométrie de l'amortisseur.

Avantageusement, cela permet de dimensionner les rondelles de guidage de manière à réduire l'encombrement. De plus, les matériaux qui constituent ces rondelles de guidage peuvent être choisis de manière à réduire les coûts. En effet, les rondelles de guidage subissant des contraintes moins fortes que dans les dispositifs de l'état de la technique la résistance aux contraintes des matériaux choisis ne doit plus forcement être aussi importante.

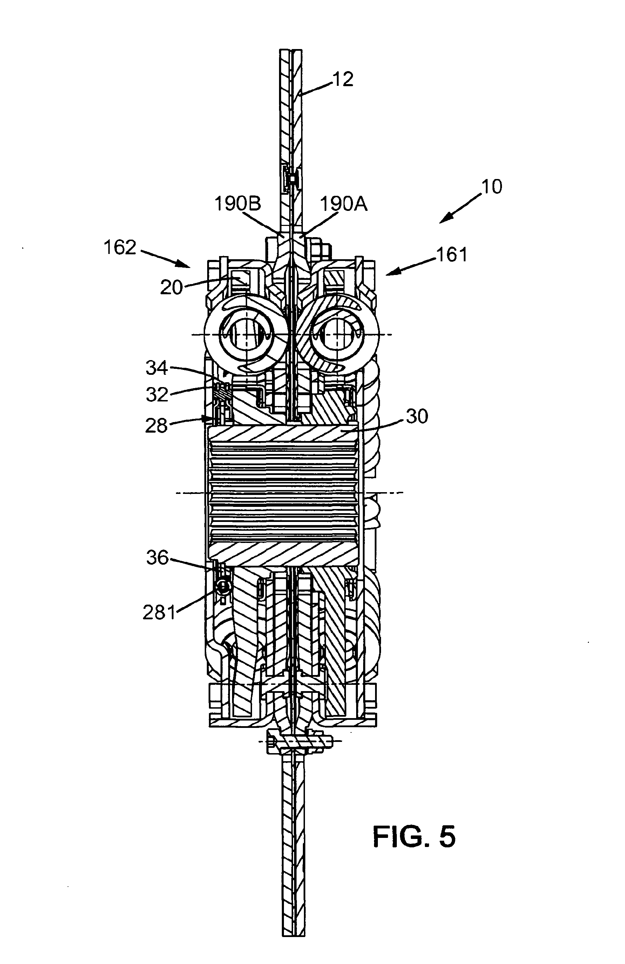

Sur la figure 5, les éléments analogues à ceux des figures 1 à 4 sont désignés par des références identiques.

Selon un deuxième mode de réalisation décrit en référence à la figure 5, le dispositif d'amortissement selon l'invention se compose de deux amortisseurs asymétriques de manière à former un double amortisseur.

On appelle double amortisseur (« dual damper » en anglais) un dispositif d'amortissement comprenant deux amortisseurs couplés en parallèle. Cela peut être assuré par le fait que les éléments d'entrée des amortisseurs sont reliés rigidement entre eux. La liaison peut se faire par vissage, soudage ou encore sertissage à chaud. Ainsi, la transmission de l'effort se fait alors directement des éléments d'entrée au moyeu (sens direct) ou inversement, par exemple quand le véhicule est en phase de freinage avec utilisation du frein moteur, la transmission de l'effort se fait du moyeu aux éléments d'entrée (sens rétrograde), par l'intermédiaire des amortisseurs en parallèle et non pas comme dans le cas des amortisseurs couplés en série, tout d'abord par l'un et ensuite exclusivement par l'autre.

Autrement dit, quand le moyeu tourne relativement à l'élément d'entrée du double amortisseur, l'action des deux amortisseurs s'ajoute de sorte qu'avec une construction relativement compacte, on peut obtenir une action d'amortissement plus importante qu'avec des amortisseurs simple ou couplés en série.

Les doubles amortisseurs sont utilisés notamment pour les véhicules industriels. En effet, les couples à transmettre sont très importants, une solution consiste alors à utiliser un double amortisseur pouvant amortir des couples importants et étant plus robuste que les amortisseurs simples ou couplés en série.

Dans ce deuxième mode de réalisation, le dispositif d'amortissement 10 comprend un élément rotatif d'entrée 12, un premier amortisseur 161, un premier flasque 190A de forme générale de révolution constituant les moyens de limitation 19 de débattement angulaire associé au premier amortisseur, un deuxième amortisseur 162 monté en série avec un pré-amortisseur 28 et un deuxième flasque 190B de forme générale de révolution constituant les moyens de limitation 19 de débattement angulaire associé au deuxième amortisseur.

Le dispositif 10 selon ce deuxième mode de réalisation dispose d'un élément rotatif de sortie sous la forme d'un moyeu 30, commun aux deux amortisseurs et au pré-amortisseur.

L'élément rotatif d'entrée 12 est un disque de friction susceptible d'être lié en rotation avec un volant moteur par pincement entre des plateaux de pression et de réaction liés en rotation avec le volant moteur et actionnés par des moyens embrayeurs.

Le premier amortisseur 161 et le premier flasque 190A sont disposés et montés tels que décrits dans le premier mode de réalisation de l'invention.

Le deuxième amortisseur 162 et le deuxième flaque 190B sont disposés et montés symétriquement par rapport à l'élément rotatif d'entrée 12.

Le pré-amortisseur 28 relie le voile 20 du deuxième amortisseur 162 et le moyeu 30.

Le pré-amortisseur 28 comprend des première 32 et deuxième 34 rondelles de guidage. Ces rondelles de guidage 32, 34 sont solidarisées en rotation avec le voile 20.

Un voile annulaire 36 de pré-amortisseur est intercalé axialement entre les deux rondelles de guidage 32, 34, co-axialement à celles-ci. Ce voile annulaire 36 est solidaire en rotation du moyeu 30, par exemple par engrènement avec la denture périphérique externe de ce moyeu 30.

Le pré-amortisseur 28 comporte également des moyens d'amortissement 281, sous la forme de ressorts hélicoïdaux, destinés à amortir des vibrations en provenance du moteur.

En cours de fonctionnement en sens direct du dispositif d'amortissement selon ce deuxième mode de réalisation, lorsqu'un couple est transmis du disque de friction 12 au moyeu 30, il passe tout d'abord par le pré-amortisseur 28.

Le pré-amortisseur 28 amortit les petites vibrations en provenance du moteur. Lorsque les ressorts hélicoïdaux 281 atteignent leur limite de compression les premier 161 et deuxième 162 amortisseurs transmettent le couple.

Lorsque les ressorts hélicoïdaux des premier 161 et deuxième 162 amortisseurs atteignent à leur tour la limite de compression souhaitée la denture externe de chaque élément rotatif de sortie des deux amortisseurs vient en butée contre la denture des flasques 190A et 190B. Le surcouple moteur est alors transmis directement du disque de friction 12 au moyeu 30 en passant par les flasques 190A et 190B et les éléments rotatif de sortie des deux amortisseurs. Les voiles des premier 161 et deuxième 162 amortisseurs subissent toujours le couple transmis par les ressorts hélicoïdaux.

En plus des avantages sur le dimensionnement des voiles des premier 161 et deuxième 162 amortisseurs, ce mode de réalisation permet d'amortir des couples plus importants notamment grâce au montage en parallèle des premier 161 et deuxième 162 amortisseurs.

On notera que l'invention n'est pas limitée aux modes de réalisations précédemment décrits.

En particulier, l'invention peut s'appliquer à un dispositif d'amortissement comportant un ou plusieurs amortisseurs symétriques ou asymétriques et un ou plusieurs pré-amortisseurs. De même, l'invention peut s'appliquer à un dispositif d'amortissement comportant une pluralité d'amortisseurs et ne comportant pas de pré-amortisseur.

## Revendications

1. Dispositif d'amortissement (10) d'oscillation de torsion notamment pour embrayage à friction, par exemple pour véhicule automobile, du type comportant au moins un amortisseur comprenant:
• des éléments rotatifs d'entrée (12) et de sortie (14) sensiblement coaxiaux,
• un premier élément de couplage (16A), de forme générale de révolution, solidaire en rotation de l'élément rotatif d'entrée (12),
• un deuxième élément de couplage (16B), de forme générale de révolution, solidaire en rotation de l'élément rotatif de sortie (14),
• des moyens d'amortissement (18) comprenant des organes élastiques portés par les premier (16A) et deuxième (16B) éléments de couplage, et
• des moyens de limitation (19) de débattement angulaire entre les premier (16A) et deuxième (16B) éléments de couplage,
ledit dispositif (10) étant **caractérisé en ce que** les moyens de limitation (19) comprennent des moyens de limitation angulaire (142, 191) complémentaires ménagés, d'une part, sur l'élément rotatif de sortie (14) et, d'autre part, sur un organe de limitation (190) solidaire en rotation de l'élément rotatif d'entrée (12), **en ce que**
l'organe de limitation (190) est de forme générale de révolution et **en ce que** l'organe de limitation (190) transmet le couple de l'élément rotatif d'entrée (12) à l'élément rotatif de sortie (14) par l'intermédiaire de l'organe de limitation, lorsque l'angle de débattement atteint l'angle de limitation.

2. Dispositif selon la revendication précédente, **caractérisé en ce que** les moyens de limitation (142, 191) sont délimités, d'une part, par des saillies radiales (191) ménagées sur le contour interne de l'organe de limitation (190) et, d'autre part, par des saillies radiales (142) ménagées sur un contour radialement externe de l'élément rotatif de sortie (14), lesdites saillies étant conformés de manière à pouvoir coopérer entre elles.

3. Dispositif selon l'une quelconque des revendications précédentes, **caractérisé en ce que** l'organe de limitation (190) est solidaire en rotation du premier élément de couplage (16A).

4. Dispositif selon l'une quelconque des revendications précédentes, **caractérisé en ce que** l'élément rotatif de sortie (14) et le deuxième élément de couplage (16B) sont conformés en une seule pièce.

5. Dispositif selon l'une quelconque des revendications précédentes, **caractérisé en ce que** le premier élément de couplage (16A) est une rondelle de guidage (22, 23) et le deuxième élément de couplage (16B) est un voile (20).

6. Dispositif selon l'une quelconque des revendications 1 à 4, **caractérisé en ce que** le premier élément de couplage (16A) est un voile (20) et le deuxième élément de couplage (16B) est une rondelle de guidage (22, 23).

7. Dispositif selon l'une quelconque des revendications précédentes, **caractérisé en ce que** l'amortisseur comprend en outre :
• un deuxième élément rotatif de sortie,
• un troisième élément de couplage, de forme générale de révolution, solidaire en rotation de l'élément rotatif d'entrée (12),
• un quatrième élément de couplage, de forme générale de révolution, solidaire en rotation du deuxième élément rotatif de sortie,
• des moyens d'amortissement comprenant des organes élastiques portés par les troisième et quatrième éléments de couplage.

8. Dispositif selon l'une quelconque des revendications précédentes, **caractérisé en ce que** l'élément rotatif d'entrée (12) est un disque de friction de l'embrayage.

9. Dispositif selon l'une quelconque des revendications précédentes, **caractérisé en ce que** l'élément rotatif de sortie est lié en rotation (14), avec ou sans jeu angulaire, à un moyeu (30) lié en rotation avec un arbre d'entrée d'une boîte de vitesses du véhicule automobile.

10. Dispositif selon l'une quelconque des revendications précédentes la revendication 7 s'appliquant, **caractérisé en ce que** le deuxième élément rotatif de sortie est lié en rotation, avec ou sans jeu angulaire, à un moyeu (30) lié en rotation avec un arbre d'entrée d'une boîte de vitesses du véhicule automobile.

11. Dispositif selon l'une quelconque des revendications précédentes, **caractérisé en ce que** l'amortisseur comprend de plus :
• un troisième élément rotatif de sortie, comprenant un troisième ensemble de cannelures ménagées sur le contour radialement interne dudit troisième élément rotatif de sortie, les cannelures dudit troisième ensemble de cannelures étant aptes à s'engrener sans jeu circonférentiel avec une denture correspondante sur la périphérie d'un moyeu (30),
• un cinquième élément de couplage (32, 34), de forme générale de révolution, solidaire en rotation d'un des deuxième (16B) ou quatrième élément de couplage,
• un sixième élément de couplage (36), de forme générale de révolution, solidaire en rotation du troisième élément rotatif de sortie,
• des moyens d'amortissement comprenant des organes élastiques (281) portés par les cinquième (32, 34) et sixième (36) éléments de couplage.

12. Chaine cinématique comprenant :
• un plateau et un volant moteur, entraîné en rotation par un moteur,
• un disque d'embrayage entrainé en rotation par frottement entre le plateau et le contre plateau,
• le moyeu du disque d'embrayage transmettant le mouvement de rotation du disque d'embrayage après amortissement à un arbre de boîte de vitesses,
**caractérisé en ce que** le disque d'embrayage est conforme à l'une quelconque des revendications précédentes.

## Patentansprüche

1. Vorrichtung (10) zur Torsionsschwingungsdämpfung, insbesondere für eine Reibungskupplung, zum Beispiel für ein Kraftfahrzeug, von der Art, die mindestens einen Dämpfer aufweist, der enthält:
• im Wesentlichen koaxiale drehende Eingangs-(12) und Ausgangselemente (14),
• ein erstes Kopplungselement (16A), von allgemein drehsymmetrischer Form, das in Drehung fest mit dem drehenden Eingangselement (12) verbunden ist,
• ein zweites Kopplungselement (16B), von allgemein drehsymmetrischer Form, das in Drehung fest mit dem drehenden Ausgangselement (14) verbunden ist,
• Dämpfungseinrichtungen (18), die elastische Organe enthalten, welche von den ersten (16A) und zweiten (16B) Kopplungselementen getragen werden, und
• Begrenzungseinrichtungen (19) des Winkelausschlags zwischen dem ersten (16A) und zweiten (16B) Kopplungselement,
wobei die Vorrichtung (10) **dadurch gekennzeichnet ist, dass** die Begrenzungseinrichtungen (19) komplementäre Winkelbegrenzungseinrichtungen (142, 191) enthalten, die einerseits auf dem drehenden Ausgangselement (14) und andererseits auf einem Begrenzungsorgan (190) eingerichtet sind, das in Drehung fest mit dem drehenden Eingangselement (12) verbunden ist, dass das Begrenzungsorgan (190) von allgemein drehsymmetrischer Form ist, und dass das Begrenzungsorgan (190) das Drehmoment des drehenden Eingangselements (12) über das Begrenzungsorgan auf das drehende Ausgangselement (14) überträgt, wenn der Ausschlagwinkel den Begrenzungswinkel erreicht.

2. Vorrichtung nach dem vorhergehenden Anspruch, **dadurch gekennzeichnet, dass** die Begrenzungseinrichtungen (142, 191) einerseits von radialen Vorsprüngen (191), die auf dem inneren Umriss des Begrenzungsorgans (190) eingerichtet sind, und andererseits von radialen Vorsprüngen (142) begrenzt werden, die auf einem radial äußeren Umriss des drehenden Ausgangselements (14) eingerichtet sind, wobei die Vorsprünge so gestaltet sind, dass sie zusammenwirken können.

3. Vorrichtung nach einem der vorhergehenden Ansprüche, **dadurch gekennzeichnet, dass** das Begrenzungsorgan (190) mit dem ersten Kopplungselement (16A) in Drehung fest verbunden ist.

4. Vorrichtung nach einem der vorhergehenden Ansprüche, **dadurch gekennzeichnet, dass** das drehende Ausgangselement (14) und das zweite Kopplungselement (16B) aus einem Stück gestaltet sind.

5. Vorrichtung nach einem der vorhergehenden Ansprüche, **dadurch gekennzeichnet, dass** das erste Kopplungselement (16A) eine Führungsscheibe (22, 23) und das zweite Kopplungselement (16B) eine Zwischenscheibe (20) ist.

6. Vorrichtung nach einem der Ansprüche 1 bis 4, **dadurch gekennzeichnet, dass** das erste Kopplungselement (16A) eine Zwischenscheibe (20) und das zweite Kopplungselement (16B) eine Führungsscheibe (22, 23) ist.

7. Vorrichtung nach einem der vorhergehenden Ansprüche, **dadurch gekennzeichnet, dass** der Dämpfer außerdem enthält:
• ein zweites drehendes Ausgangselement,
• ein drittes Kopplungselement, von allgemein drehsymmetrischer Form, das in Drehung fest mit dem drehenden Eingangselement (12) verbunden ist,
• ein viertes Kopplungselement, von allgemein drehsymmetrischer Form, das in Drehung fest mit dem zweiten drehenden Ausgangselement verbunden ist,
• Dämpfungseinrichtungen, die elastische Organe enthalten, die vom dritten und vierten Kopplungselement getragen werden.

8. Vorrichtung nach einem der vorhergehenden Ansprüche, **dadurch gekennzeichnet, dass** das drehende Eingangselement (12) eine Reibscheibe der Kupplung ist.

9. Vorrichtung nach einem der vorhergehenden Ansprüche, **dadurch gekennzeichnet, dass** das drehende Ausgangselement (14) in Drehung mit oder ohne Winkelspiel mit einer Nabe (30) verbunden ist, die in Drehung mit einer Eingangswelle eines Getriebes des Kraftfahrzeugs verbunden ist.

10. Vorrichtung nach einem der vorhergehenden Ansprüche, wobei Anspruch 7 anwendbar ist, **dadurch gekennzeichnet, dass** das zweite drehende Ausgangselement in Drehung mit oder ohne Winkelspiel mit einer Nabe (30) verbunden ist, die in Drehung mit einer Eingangswelle eines Getriebes des Kraftfahrzeugs verbunden ist.

11. Vorrichtung nach einem der vorhergehenden Ansprüche, **dadurch gekennzeichnet, dass** der Dämpfer außerdem enthält:
• ein drittes drehendes Ausgangselement, das eine dritte Einheit von Hohlkehlen enthält, die auf dem radial inneren Umriss des dritten drehenden Ausgangselement ausgespart sind, wobei die Hohlkehlen der dritten Einheit von Hohlkehlen ohne Umfangsspiel in eine entsprechende Zahnung am Umfang einer Nabe (30) eingreifen können,
• ein fünftes Kopplungselement (32,34), von allgemein drehsymmetrischer Form, das in Drehung fest mit einem der zweiten (16B) oder vierten Kopplungselemente verbunden ist,
• ein sechstes Kopplungselement (36), von allgemein drehsymmetrischer Form, das in Drehung fest mit dem dritten drehenden Ausgangselement verbunden ist,
• Dämpfungseinrichtungen, die elastische Organe (281) enthalten, die vom fünften (32, 34) und sechsten (36) Kopplungselement getragen werden.

12. Kinematische Kette, die enthält:
• eine Platte und ein Schwungrad, das von einem Motor in Drehung versetzt wird,
• eine Kupplungsscheibe, die durch Reibung zwischen der Platte und der Gegenplatte in Drehung versetzt wird,
• wobei die Nabe der Kupplungsscheibe die Drehbewegung der Kupplungsscheibe nach Dämpfung auf eine Getriebewelle überträgt,
**dadurch gekennzeichnet, dass** die Kupplungsscheibe einem der vorhergehenden Ansprüche entspricht.

## Claims

1. Device (10) for damping torsion oscillation particularly for a friction clutch, for example for a motor vehicle, of the type comprising at least one damper comprising:
• substantially coaxial rotary input (12) and output (14) elements,
• a first coupling element (16A) of axisymmetric overall shape coupled in rotation to the rotary input element (12),
• a second coupling element (16B) of axisymmetric overall shape coupled in rotation to the rotary output element (14),
• damping means (18) comprising elastic members borne by the first (16A) and second (16B) coupling elements, and
• means (19) for limiting angular deflection between the first (16A) and second (16B) coupling elements,
the said device (10) being **characterized in that** the limiting means (19) comprise complementary angular limiting means (142, 191) formed, on the one hand, on the rotary output element (14) and, on the other hand, on a limiting member (190) coupled in rotation to the rotary input element (12), **in that** the limiting member (190) is of axisymmetric overall shape, and **in that** the limiting member (190) transmits the torque of the rotary input element (12) to the rotary output element (14) via the limiting member when the deflection angle reaches the limiting angle.

2. Device according to the preceding claim, **characterized in that** the limiting means (142, 191) are delimited, on the one hand, by radial projections (191) formed on the internal contour of the limiting member (190) and, on the other hand, by radial projections (142) formed on a radially external contour of the rotary output element (14), the said projections being configured so as to be able to cooperate with one another.

3. Device according to either one of the preceding claims, **characterized in that** the limiting member (190) is coupled in rotation to the first coupling element (16A).

4. Device according to any one of the preceding claims, **characterized in that** the rotary output element (14) and the second coupling element (16B) are formed in one piece.

5. Device according to any one of the preceding claims, **characterized in that** the first coupling element (16A) is a guide washer (22, 23) and the second coupling element (16B) is a web (20).

6. Device according to any one of Claims 1 to 4, **characterized in that** the first coupling element (16A) is a web (20) and the second coupling element (16B) is a guide washer (22, 23).

7. Device according to any one of the preceding claims, **characterized in that** the damper additionally comprises:
• a second rotary output element,
• a third coupling element of axisymmetric overall shape coupled in rotation to the rotary input element (12),
• a fourth coupling element of axisymmetric overall shape coupled in rotation to the second rotary output element,
• damping means comprising elastic members borne by the third and fourth coupling elements.

8. Device according to any one of the preceding claims, **characterized in that** the rotary input element (12) is a friction disc of the clutch.

9. Device according to any one of the preceding claims, **characterized in that** the rotary output element (14) is connected in rotation, with or without angular play, to a hub (30) connected in rotation with an input shaft of a gearbox of the motor vehicle.

10. Device according to any one of the preceding claims, Claim 7 applying, **characterized in that** the second rotary output element is connected in rotation, with or without angular play, to a hub (30) connected in rotation with an input shaft of a gearbox of the motor vehicle.

11. Device according to any one of the preceding claims, **characterized in that** the damper additionally comprises:
• a third rotary output element comprising a third set of splines formed on the radially internal contour of the said third rotary output element, the splines of the said third set of splines being able to engage without circumferential play with corresponding teeth on the periphery of a hub (30),
• a fifth coupling element (32, 34) of axisymmetric overall shape coupled in rotation to one of the second (16B) or fourth coupling elements,
• a sixth coupling element (36) of axisymmetric overall shape coupled in rotation to the third rotary output element,
• damping means comprising elastic members (281) borne by the fifth (32, 34) and sixth (36) coupling elements.

12. Drivetrain comprising:
• a plate and an engine flywheel which is rotated by an engine,
• a clutch disc rotated by friction between the plate and the counter-plate,
• the hub of the clutch disc transmitting the rotational movement of the clutch disc after damping to a gearbox shaft,
**characterized in that** the clutch disc is in accordance with any one of the preceding claims.
